# EUROPEAN PATENT SPECIFICATION

(11) **EP 2 662 947 B1**
(45) Date of publication and mention of the grant of the patent: **04.03.2026**
(21) Application number: 12177852.6
(22) Date of filing: 25.07.2012
(51) Int. Cl.: H01M 10/44, H02J 7/34

(54) **Charging electronic devices**
Aufladung von elektronischen Geräten
Chargement des dispositifs électroniques

(30) Priority: 09.05.2012 US 201213467617
(43) Date of publication of application: 13.11.2013
(73) Proprietor: Malikie Innovations Limited, Dun Laoghaire, Dublin A96 VR66 (IE)
(72) Inventor: Files, Jace William, Irving, TX Texas 75039 (US); Boda, Mallikarjun, Irving, TX Texas 75039 (US)
(74) Representative: Murgitroyd & Company

(56) References cited:
- EP-A1- 1 990 887
- EP-A1- 2 424 067
- US-A1- 2009 174 366
- US-A1- 2011 068 750

## Description

### FIELD

The present disclosure pertains to charging electronic devices, and, more particularly, to charging electronic devices that include multiple charging ports, including a charging port for an universal serial bus on-the-go device.

### BACKGROUND

An electronic device can include a Universal Serial Bus (USB) port to connect to other devices. USB On-The-Go (OTG) and USB host mode (collectively referred to herein as USB HOST MODE), allow USB devices, such as personal digital assistants (PDAs), digital audio players, tablet PCs, smartphones, and/or mobile phones, to act as a "host" allowing other USB devices, such as USB flash drives, mouse, keyboard, etc., to be attached as a "slave." (As used herein, terms such as "master" and "slave" connote a host and peripheral technological relationship and are not intended to carry any connotation beyond the technological one.) USB HOST MODE introduces the concept that a device can perform both the master and slave roles. With USB HOST MODE, a device can be either a host (acting as the link master) or a peripheral (acting as the link slave). In the master/slave architecture, a USB host acts as the protocol master, and the other USB device acts as the slave. The host can schedule the configuration and data transfers over the USB link. In general, the slave devices cannot or do not initiate data transfers, but respond to requests given by a host.

US 2009/0174366 A1 shows a mobile electronic device operable to employ a rechargeable battery as a power source and includes a USB port suitable for connecting an external device to the mobile electronic device and a power management device operable in a first mode as a battery charger to recharge the battery from an external power source and further operable in a second mode as a boost converter to power the external device from battery supplied power. The device further comprises a port for an AC adapter to charge the battery.

EP 2 424 067 A1 shows a power management circuit for a portable electronic device comprising an internal battery to be charged either through a USB interface or through an AC-DC conversion circuit. The circuit comprises a first buck/boost converter which is connected to the USB interface and can be controlled either in a buck or a boost mode to either charge the battery or supply power from the battery. The circuit further comprises a second buck/boost converter for charging the battery through an AC/DC interface. Bypass circuits are used for performing, under control of a control circuit, the bypass of either the voltage of the battery or the voltage generated by said buck/boost controllers when in boost mode to a second interface, e.g. SIM/MMC.

### SUMMARY OF INVENTION

In accordance with the invention, there is provided a method for charging an electronic device, and an electronic device as set forth in the claims. Any examples or embodiments described herein that fall outside of the scope of the claims are described to provide context and to help understand the invention.

### DESCRIPTION OF THE DRAWINGS

FIG. 1 is a schematic illustration of an example electronic device having multiple charging ports.
FIG. 2 is a functional block diagram of a circuit for charging an electronic device and a USB HOST MODE peripheral device connected to the electronic device.
FIG. 3 is a schematic illustration of an example circuit for charging an electronic device and a USB HOST MODE peripheral device connected to the electronic device.
FIG. 4 is a process flow diagram for charging an electronic device and/or a USB HOST MODE peripheral device connected to the electronic device.

### DETAILED DESCRIPTION

Electrical devices may include two or more charging ports, including, among others, a port to connect the device with a cradle, a charging station, or other charging platform or device (collectively referred to herein as a cradle or cradle device), and a USB port. For electrical devices with two charging ports, charging of the electrical device may occur through the cradle or through the USB port. For USB HOST MODE, however, power is supplied through the USB port. Typical devices that may include such charging ports may include a tablet computer, a smartphone, a laptop computer, a navigation device, and others. Many of these devices may be readily portable from place to place, and some may be handheld, that is, sized and shaped to be held or carried in a human hand, and typically may be used while so held.

In a USB On-the-Go (USB HOST MODE) mode, two USB HOST MODE peripheral devices, such as two handheld devices, can be coupled or connected together. (In general, when components are described herein as connected to one another, they may be physically connected, electrically connected, mechanically connected, optically connected or any combination thereof, according to context.) In this fashion, data can be exchanged between two portable electronic devices, with one device acting as the host and the other device acting as the peripheral. While in the USB HOST MODE, the portable electronic device must ordinarily be capable of supplying power, such as 5V and a limited supply of current (typically up to 300mA - 500mA), to the USB HOST MODE peripheral device. The USB HOST MODE peripheral device may be, for example, a flash memory drive, a second handheld communications device, or other device.

In general, the present disclosure pertains, at least in part, to implementations in which charge or power from a power source is transmitted or directed to where it is needed. The term "direct" can imply the existence of a circuit path through which electrical charge can flow. A host electronic device may, for example, receive a charge from one charging port, and direct the charge to a battery or to the other charging port. In a particular illustration, the present disclosure is directed, at least in part, to allowing for a USB HOST MODE peripheral device to be powered by the power pack, which for simplicity may be illustrated as a rechargeable battery (although a power pack may also include more batteries and one or more other energy storage elements), of the electronic device through the USB port while ensuring that any charge detected on a connector of the USB port does not trigger the battery to charge itself. Furthermore, the present disclosure is directed to allowing for a USB HOST MODE peripheral device connected to the USB port to receive power while the electronic device is connected to a cradle, and is itself receiving power. The present disclosure contemplates hardware and software implementations. The hardware implementations include a bypass circuit in electrical communications with a battery charger that provides the appropriate signals or indicators to the battery charger to trigger the charging of the battery or to indicate to the battery charger to refrain from charging the battery, depending on the voltage or other input on particular terminals of the bypass circuit. Signals or indicators can include one or more of a voltage, a current, a binary signal, an electromagnetic field, a software encoded instruction, a lack of any of the previously mentioned signals, or other signal.

The bypass circuit includes a first connection to the USB port and a second connection to the USB port. The first connection may be a terminal of the USB port that when connected, establishes a connection with the battery charger so that when a charge is received on the first connection, the battery charger may initiate charging of the battery. The second connection to the USB port may be a terminal of the USB port that when connected, establishes an electrical connection to the battery of the electronic device so that when connected to a peripheral device, the battery may provide (or supply) charge (or power) to the peripheral device. The first and second connections may be electrically connected to inputs of a circuit element. If a charge is detected on the second connection, the circuit element provides an indicator to/through the remainder of the bypass circuit (and to other elements of the electronic device, such as the battery charger) that a peripheral device is connected to the USB port and needs power and that charging from the USB should not occur. It is understood that a latent charge may reside at a terminal of the charging ports. Latent charges would not trigger charging events, particularly when no circuit path exists between the charging port and the external device. In certain implementations, the circuit element is a transistor, such as an n-type metal oxide semiconductor field effect transistor (NFET), which behaves as an electronic switch. For example, the second connection can be an input to the gate of the NFET (i.e., the gate voltage of the NFET could be a function of the voltage on the second connection), and the first connection can be an input to the drain of the NFET (i.e., the drain voltage of the NFET could be a function of the voltage on the first connection). The source of the NFET can be held at ground. If the gate voltage is equal to or greater than a threshold voltage for the NFET, the NFET will allow current to flow. Holding the source of the NFET to ground essentially creates a short circuit (or low resistance circuit pathway) across the transistor. Thus, voltage on the first connection will go to ground (a resistor can be used downstream of the first connection). Thus, the output of the NFET will be a zero voltage if the gate voltage is high (i.e., there is sufficient charge on the second connection). This is so whether or not there is a voltage on the first connection.

If there is insufficient voltage on the second connection (i.e., gate voltage of the NFET is below a threshold), then the NFET acts as an open circuit. If there is a voltage on the first connection (i.e., there is a charger connected to the USB port), then the output of the bypass circuit will cause the battery charger to charge the battery. More particularly, the voltage on the first connection can cause a current to flow through the bypass circuit, providing a signal or other indication to the battery charger to charge the battery from the USB port. The NFET "open circuit" can prevent current from flowing back to the USB port through the second connection.

The bypass circuit also includes a third connection connected to the second charging port. The second charging port can be connected to the cradle. The cradle can, in general, be connected to a battery charging device. The third connection can be connected to a diode (or other functionally equivalent circuit element(s)) preventing current from or to the USB port from entering the cradle. Similarly, a diode (or other functionally equivalent circuit element(s)) can reside proximate the output of the NFET to prevent current from the third connection from entering the USB port.

In certain implementations, the battery charger includes a circuit element that can interpret signals or other indicators from the bypass circuit to either charge or not charge the battery. The circuit element may, in some implementations, be a negative chip enable pinout, which interprets a low signal as a trigger to charge the battery and a high signal not to charge the battery. The bypass circuit can include a circuit element that acts as an inverter, receiving input from the first and second ports. If there is a voltage on the second connection and no voltage on the third connection, the output of the NFET will be a low signal (e.g., in implementations where the NFET is connected to ground), and the output of the inverter circuit element will be a high signal. An input of high into the negative chip enable circuit element will cause the battery charger to refrain from charging the battery. This is so whether or not there is a voltage on the first connection (e.g., a resistor downstream of the first connection, subsequently connected to the drain of the NFET, which has a source connected to ground, will cause the voltage on the
first connection to drop to ground). A low signal at the inverter will create a high signal at the negative chip enable circuit element to cause the battery charger to refrain from charging the battery. If there is a voltage on the first connection, and no voltage on the second connection, however, the input to the inverter will be a high signal, and the output of the inverter will be a low signal. A low signal into the negative chip enable circuit element will cause the battery charger to charge the battery. Similarly, a voltage on the third connection will be a high signal at the inverter, and a low signal on the negative chip enable circuit element, also causing the battery charger to charge the battery. In this implementation, a voltage on the third connection (i.e., a cradle voltage) will cause the battery to charge, whether or not a peripheral device or battery charger is connected to the USB port. The inverter circuit element can be a transistor, such as a bipolar junction transistor (BJT), or more specifically, an NPN BJT.

Other implementations are also contemplated. For example, the functions described above can be achieved using software to interpret voltage signals and activate (or refrain from activating) the battery charger based on the voltage signals. An analog-to-digital converter and a data acquisition device can be used to receive input signals from the first and second ports, interpret them, and facilitate the appropriate response.

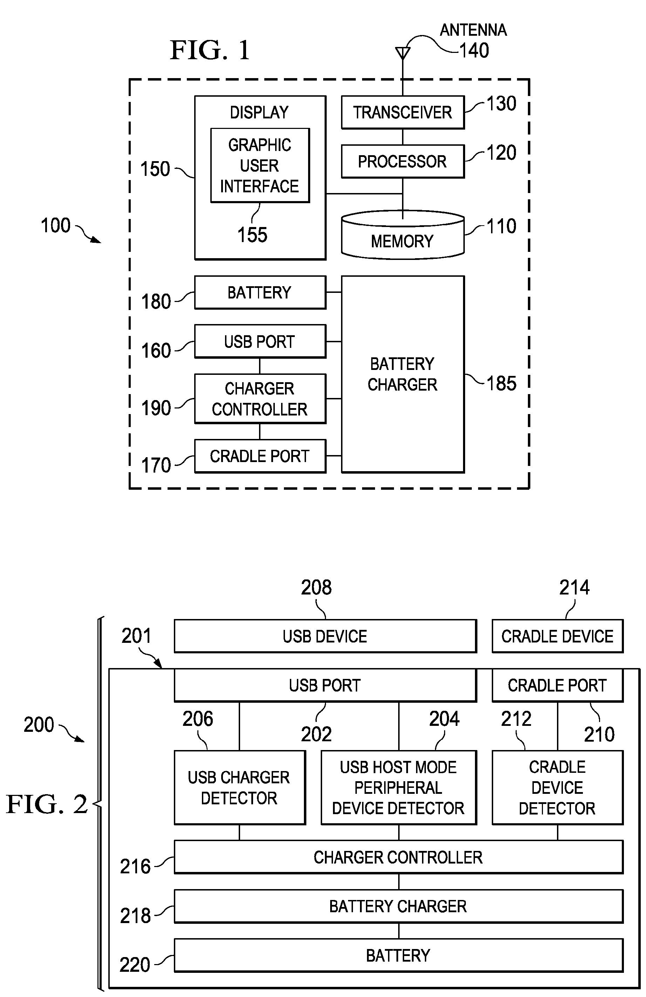

FIG. 1 is a schematic illustration of an example electronic device 100 having multiple charging ports. FIG. 1 is an example electronic device 100, which can be a wireless communications device capable of communicating (e.g., communicating voice or data) with another entity, such as a cellular network. The electronic device 100 can be a tablet device, a smartphone, or other electronic device. The electronic device 100 may include a processor 120, a memory 110, a wireless transceiver 130, an antenna 140, and a display 150 capable of displaying a graphical user interface (GUI) 155. Electronic device 100 also includes at least two charging ports. In FIG. 1, two charging ports are illustrated as a cradle port 170 and a USB port 160. The electronic device 100 also includes a rechargeable battery 180 that can provide power to the electronic device 100, as well as to external devices, such as those connected to the USB port 160. The electronic device 100 also includes a battery charger 185 coupled to the rechargeable battery 180. Battery charger 185 can be connected to the cradle port 170 and the USB port 160, and can charge rechargeable battery 180 using power received from a charging device connected to the cradle port 170 and/or the USB port 160. A charger controller 190 can also be coupled to the cradle port 170 and the USB port 160. Charger controller 190 can receive
input signals from the cradle port 170 and/or USB port 160 to control whether the battery charger 185 should charge the rechargeable battery 180. The charger controller 190 includes a bypass circuit to control the battery charger 185. It should be understood that the electronic device 100 may include additional or different components.

The processor 120 may include a microprocessor, a central processing unit, a graphic control unit, a network processor, or other processors for carrying out instructions stored in the memory 110. The functions of the processor 120 may include computation, queue management, control processing, graphic acceleration, video decoding, and execution of a sequence of stored instructions from the program kept in the memory 110. In some implementations, the processor 120 may also be responsible for signal processing including sampling, quantizing, encoding/decoding, and/or modulation/demodulation of the signal.

The memory 110 may include any memory or database module and may take the form of volatile or non-volatile memory including, without limitation, magnetic media, optical media, random access memory (RAM), read-only memory (ROM), removable media, or any other suitable local or remote memory component. The memory 110 may store various objects or data, including classes, frameworks, applications, backup data, business objects, jobs, web pages, web page templates, database tables, repositories storing business and/or dynamic information, and any other appropriate information including any parameters, variables, algorithms, instructions, rules, constraints, or references thereto associated with the purposes of the wireless communication device and its personal/enterprise applications.

The wireless transceiver 130 can include both the transmitter circuitry and the receiver circuitry. The wireless transceiver 130 may be responsible for up-converting a baseband signal to a passband signal or vice versa. The components of wireless transceiver 130 may include a digital to analog converter/analog to digital converter, amplifier, frequency filter and oscillator. An antenna 140 generally comprises a transducer which can transmit and/or receive electromagnetic waves. The antenna 140 can convert electromagnetic radiation into electric current, or vice versa. The antenna 140 is generally responsible for the transmission and reception of radio waves, and can serve as the interface between the wireless transceiver 130 and the wireless channel. In some implementations, the electronic device 100 may be equipped with multiple antennas to take advantage of the multiple-input-multiple-output (MIMO) technology. The multiple antenna MIMO technology may enable the electronic device 100 to set up multiple parallel data streams on the wireless channel, thereby increasing the throughput or reliability of the wireless channel. Though shown external to the electronic device 100, the antenna 140 may be housed within the electronic device 100.

The display 150 can be an output unit for presentation of information in visual or tactile form in response to electronic input signals. In some implementations, the display 150 may include a touchscreen, which is an electronic visual display that may detect the presence and location of a touch within the display area. Touchscreen may generally refer to a display that detects a touch with a finger or hand. Touchscreens also may detect other passive objects, such as a stylus. Therefore, a display 150 that includes a touchscreen can also be used as an input unit. In some cases, the electronic device 100 may also include a keypad as an input unit.

The GUI 155 may be presented on the display 150. The GUI 155 may be operable to the interface with resources included in the personal perimeter and/or the enterprise perimeter. For example, the GUI 155 may generate a visual representation of applications (e.g., a web browser application). The GUI 155 may provide interface for interactions between the electronic device 100 and an enterprise service. Generally, through the GUI 155, the user is provided with an efficient and user-friendly presentation of data provided by or communicated within the system. The GUI 155 may be any graphical user interface, including but not limited to, a web browser, touch screen interface, or command line interface (CLI) that processes information and presents the processed results to the user. In general, the GUI 155 may include a plurality of user interface elements, such as interactive fields, pull-down lists, and buttons operable by the user on the electronic device 100.

FIG. 2 is a functional block diagram 200 of a circuit for charging an electronic device 201 and a USB HOST MODE peripheral device 208 connected to the electronic device 201. Electronic device 201 includes a USB port 202 and a cradle port 210. The USB port 202 can be connected to a USB HOST MODE peripheral device 208. USB HOST MODE peripheral device 208 shown here can be a USB charger, or other USB connection. The cradle port 210 can be connected to a cradle device 214, which can be a charger, docking station, or other device that can charge battery 220 and/or otherwise communicate with the electronic device 201. The electronic device 201 also includes a charger controller 216. Charger controller 216 can receive signals or other indicators of whether a USB charger is connected to the USB port 202 or whether a USB HOST MODE peripheral device 208 is connected to the USB port 202. A USB charger detector 206 or a USB HOST MODE peripheral device detector 204 can receive an input from the USB port 202 and send a signal to the charger controller 216. A cradle device detector 212 can similarly receive a signal or indicator from the cradle port 210 and send a signal or indicator to the charger controller 216. Based on the inputs received, the charger controller 216 can send a signal or other indicator to the battery charger 218, which can charge (or refrain from charging) the battery 220, depending on the input to the battery charger 218.

The USB HOST MODE peripheral device detector 204, the USB charger detector 206, and/or the cradle device detector 212 may be software, hardware, or a combination of the two. For example, the USB HOST MODE peripheral device detector 204 may be (or include) a terminal that receives an input voltage from the battery 220 or other circuit element directed to a USB HOST MODE peripheral device 208. A voltage on the terminal may be sufficient to signal the charger controller 216 that a USB HOST MODE peripheral device 208 is connected to the USB port 202 and to send a signal to the battery charger 218 to refrain from charging the battery 220. Similarly, the USB charger detector 206 may be (or include) a terminal that receives a voltage from a USB charger, and when a charge is received on the terminal, the battery charger 218 may charge the battery 220 using a circuit path that includes the USB charger (but USB charging may depend on whether a charge is received on the USB HOST MODE peripheral device detector 204). The cradle device detector 212 may be (or include) a terminal that receives a voltage from a cradle device 214, and upon receiving a charge on the terminal, the battery charger 218 may charge the battery 220 using a circuit path that includes a connection to the cradle device 214.

An analog-to-digital (A/D) converter may also be used to receive signals from the USB port 202 and/or the cradle port 210, and input signals to a processor, such as processor 120 of FIG. 1. The processor can use software to interpret signals, and communicate with the battery charger 218 to either charge or refrain from charging the battery 220. Charger controller 216, USB HOST MODE peripheral device detector 204, USB charger detector 206, and cradle device detector 212 may be software modules executed by the processor to interpret input signals and execute instructions based on those signals. Such instructions may include instructions to the battery charger 218 to charge or refrain from charging the battery 220. Other implementations are also possible.

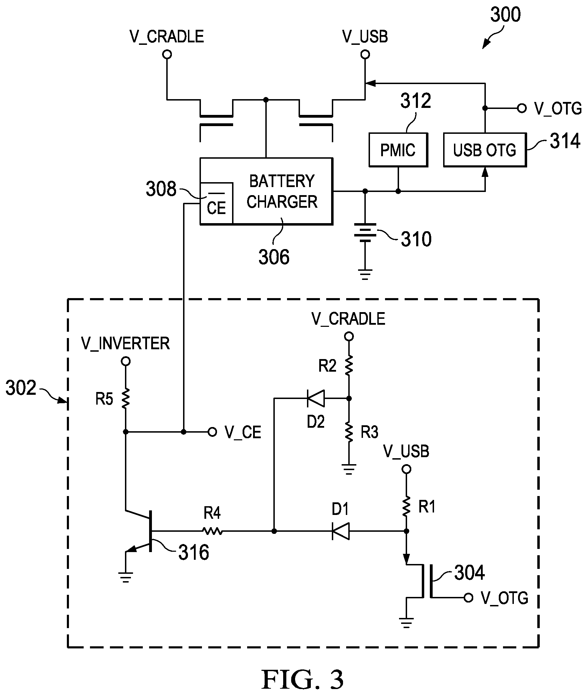

FIG. 3 is a schematic illustration of an example circuit 300 for charging an electronic device and a USB HOST MODE peripheral device connected to the electronic device. The circuit 300 is an example circuit layout, and it is to be understood that other circuit elements and circuit layouts may also be used.

The circuit 300 of FIG. 3 includes a bypass circuit 302 (shown in the dotted box). The bypass circuit 302 includes terminals V_USB, V_OTG, and V_Cradle. The ports are connected to a battery charger 306 and a bypass circuit 302. The battery charger 306 is electrically coupled to a battery 310. The battery charger 306 of FIG. 3 includes a negative chip enable input 308, which is connected to the bypass circuit 302. A low signal on the negative chip enable input 308 signals the battery charger 306 to charge the battery 310 (and vice versa - a high signal at the negative chip enable input 308 signals the battery charger 306 to refrain from charging the battery 310). The battery 310 provides power to a power management integrated circuit (PMIC) 312, which can provide power to the USB port when a USB HOST MODE peripheral device 314 is attached.

V_Cradle is electrically coupled to the cradle port. Similarly, V_USB is electrically coupled to the USB port, for example, on a first connection to the USB port. V_OTG is also electrically coupled to the USB port, for example, on a second connection to the USB port. V_OTG is electrically coupled to a circuit element. In the example circuit shown in FIG. 3, V_OTG terminal is connected to the gate of NFET 304. The source of NFET 304 is coupled to ground. V_USB is coupled to the source of NFET 304 by way of a resistor R1. In certain implementations, R1 may be a high resistance resistor. A diode D1 is connected to the source of NFET 304 and at a downstream terminal of R1.

A V_Cradle terminal is electrically coupled to D2 through resistor R2. V_Cradle is also connected to resistor R3, which is connected to ground. An inverter 316 is coupled downstream of D1 and D2, and, in this case, a resistor R4 resides between the diodes and the inverter 316. In FIG. 3, the inverter 316 is an NPN BJT, and the diode D1 is electrically coupled to the base of the NPN BJT inverter 316. The emitter of the NPN BJT inverter 316 is held at ground. The collector of the NPN BJT inverter 316 can be coupled to a voltage source V_Inverter across a resistor R5. The NPN BJT acts as an inverter so that a high signal at its base makes V_CE a low voltage. The V_Inverter voltage drops across R5 when the NPN BJT has a base voltage equal to or greater than a threshold value associated with the transistor. This threshold voltage can be based on the properties of the BJT, and the base voltage can be a function of a voltage at V_Cradle, V_USB, and/or V_OTG. A low signal at the NPN BJT base sets a high V_CE value because there is no voltage drop across R5.

The bypass circuit facilitates the following state table:

| **V_Cradle** | **V_USB** | **V_OTG** | **Charge Battery?** |
|---|---|---|---|
| High | - | - | Yes |
| Low | High | Low | Yes |
| Low | Low | High | No |

When a USB HOST MODE peripheral device 314 is connected to the USB port, the voltage at V_OTG is high (for example, because the battery is sending power to it). When the V_OTG voltage is high, the NFET 304 acts as a short circuit. The input to the diode D1 is a low signal, which carries on to the input of the inverter 316. Assuming that there is no voltage at V_Cradle, the output of the inverter 316 is a high signal (as described above) as is the input to the negative chip enable input 308 of the battery charger 306, thus signaling the battery charger 306 to refrain from charging the battery 310. Thus, when a USB_OTG peripheral device is connected to the USB port, the bypass circuit 302 signals the battery charger 306 to refrain from charging the battery 310 (assuming V_Cradle = 0).

When a USB HOST MODE peripheral device 314 is connected, the inverter 316 will output a high signal whether or not there is a voltage at V_USB because the NFET 304 acts as a short circuit to ground. A voltage at V_USB will drop across R1 to ground in that scenario. When there is no USB HOST MODE peripheral device 314 connected, however, the NFET 304 behaves like an open circuit, and a voltage at V_USB will cause charge to flow through resistor R1 and diode D1. In that case, the input to the inverter 316 will be high, and the output will be low (because the voltage at V_Inverter will drop to ground across R5). A low signal at V_CE, which is a low signal at the negative chip enable input 308 of the battery charger 306 signals the battery charger 306 to charge the battery 310.

When there is a voltage at V_Cradle, the bypass circuit 302 will allow charging of the battery 310 whether or not there is a USB HOST MODE peripheral device 314 connected to the USB port. In the bypass circuit 302, a voltage at the V_Cradle terminal provides a high input to the inverter 316, which would output a low signal to V_CE and to the negative chip enable input 308. The low signal at the negative chip enable input 308 signals the battery charger 306 to charge the battery 310. An input at the USB port would not change this behavior because the V_Cradle voltage will be high at the inverter input regardless of what the other inputs are. The diodes D1 and D2 help facilitate this behavior. For example, diode D1 restricts voltage from V_Cradle from the drain of the NFET 304. Similarly, diode D2 restricts voltage from V_USB from V_Cradle. In sum, if V_Cradle is high, then the battery charger 306 will charge the battery 310. If V_Cradle is low, but V_OTG is high, then the battery charger 306 will not charge the battery 310, whether or not V_USB is high. If V_OTG is low, but V_USB is high, then the battery charger 306 will charge the battery 310.

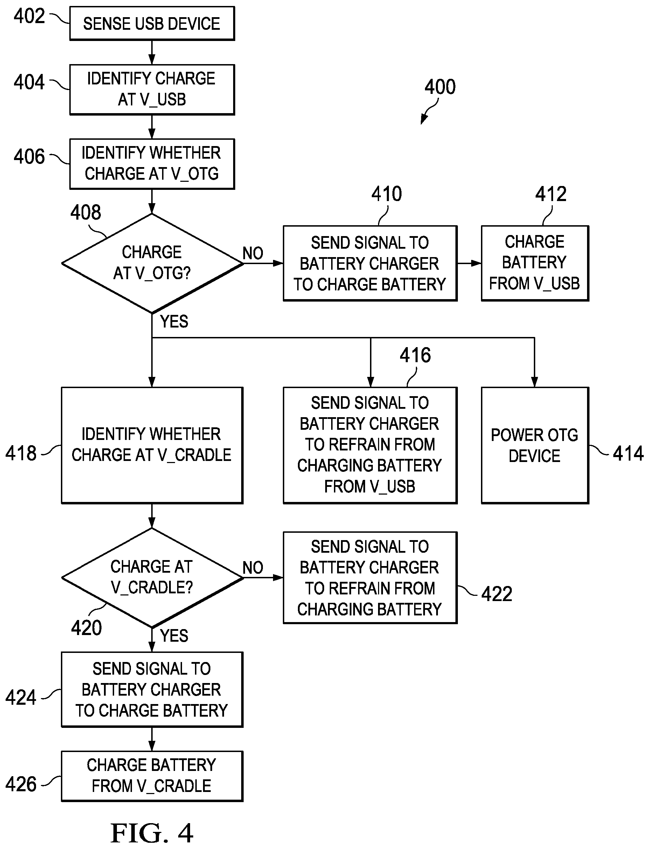

FIG. 4 is a process flow diagram 400 for charging an electronic device and/or a USB HOST MODE peripheral device connected to the electronic device. The electronic device includes a first charging port. The first charging port is a USB port that can receive a peripheral device either directly or through a cable or by other ways. The electronic device can sense whether a USB device (such as a USB charger or USB HOST MODE peripheral device) is connected to the first charging port of the electronic device (402). In certain instances, the electronic device can sense the USB device because, for example, the attachment of a USB device to the USB port can close a circuit between the electronic device and the USB device. The closed circuit can cause voltage across the closed circuit to allow the movement of charge between the electronic device and the USB device. This movement of charge may be sufficient to establish a signal to the electronic device that the USB device is connected to the electronic device.

The first charging port may include several pins or terminals (generally, terminals). The terminals can individually connect to terminals on the USB device to complete one or more circuits. In general, when a terminal of the first charging port completes a circuit with a terminal on the USB device, this interface can be referred to as a "connection." A first connection completes a circuit between the USB device and a battery charger of the electronic device. A second connection completes a circuit between the USB device and a PMIC of the electronic device. For example, if the USB device includes a USB HOST MODE peripheral device, the battery and/or PMIC from the electronic device can power the USB HOST MODE peripheral device. In some instances, one or both connections can be completed. In addition, both of the first and second connections complete a circuit with a bypass circuit (or charger controller circuit). A completion of a circuit can allow voltage to move charge across a connection.

The first connection can include a terminal referred to as V_USB. A charge can be identified at a first connection of the USB port (404). The charge can be identified, for example, because the existence of a circuit path based on a first connection between V_USB and the USB device allows voltage to move charge across the first connection. In general, the term "identify" is meant to include different ways of sensing, determining, detecting, or otherwise identifying, in this case, that a charge exists at a connection. It can also be identified whether there is a charge at a second connection of the USB port (406). The second connection can include a terminal referred to as V_OTG (408). If there is a charge at the first connection of the USB port (406) and no charge at V_OTG, then the bypass circuit allows a signal to be sent to the battery charger to charge the battery (410), and the battery charger can charge the battery (412).

If there is a charge at V_OTG (e.g., the USB device includes a USB HOST MODE peripheral device, and the second connection completes a circuit between a terminal of a USB HOST MODE peripheral device (V_OTG) and a terminal of the first charging port), the electronic device can provide power to the USB HOST MODE peripheral device (414). For example, charge from the PMIC of the electronic device can be directed across the second connection to the USB HOST MODE peripheral device. In addition, a signal can be sent to the battery charger (e.g., from the bypass circuit) to refrain from charging the battery from the connection that includes terminal V_USB (416).

In certain implementations, a determination can be made (e.g., in software) of whether an USB HOST MODE peripheral device is connected. The previous discussion illustrates some techniques by which a processor or battery charger may determine, through voltage or signals, whether a peripheral device is electrically connected to a port. In other instances, the bypass circuit can operate based on the circuit elements and without making a determination. Specifically, a voltage at V_OTG may be an input voltage into the circuit element described in FIG. 3 (NFET 304). The NFET operates based on the presence of a threshold voltage at a gate terminal (V_OTG). A voltage at V_OTG that is sufficiently high can activate the transistor to pass current without the transistor having to make a determination - the transistor simply activates. A USB device connected to the first charging port can close a circuit for one or both of V_USB and V_OTG, which causes a voltage on V_USB and/or V_OTG. If the USB device is a USB charger, then there may be no voltage on V_OTG. If the USB device is a USB HOST MODE peripheral device, there may be a voltage on V_USB and V_OTG. A voltage at both terminals may cause the battery to try to charge itself. Thus, V_USB and V_OTG are connected to a bypass circuit. The bypass circuit can include a circuit element that can detect or sense a voltage at V_USB and at V_OTG. The circuit element may be a transistor, such as an NFET. V_OTG may be connected to the gate of the NFET, and V_USB can be connected to the drain of the NFET via a high resistance resistor. If there is a voltage at V_OTG that is sufficiently high, the NFET can activate, causing current to flow from the drain to the source of the NFET. By keeping the source of the NFET at ground, current will flow through the transistor to ground when the transistor is activated - so when there is a voltage on V_OTG and V_USB, no charge flows out of the NFET into the rest of the bypass circuit (see FIG. 3). This lack of charge flow can establish a signal to the battery charger to refrain from charging the battery. If there is no voltage at V_OTG, the transistor acts as an open circuit. Voltage at V_USB can cause charge to flow out of the NFET and into the rest of the bypass circuit, signaling the battery charger to charge the battery (e.g., from V_USB).

A charge can be sensed at a second charging port which includes a cradle terminal (V_Cradle) (418). The second charging port can be an interface for a cradle charging device or other device. A third connection can be established by the interface between V_Cradle and a terminal on the cradle device. The third connection can establish a circuit path between the cradle device and elements of the electronic device, such as the battery charger and/or bypass circuit. When there is a voltage at the cradle port (420), a signal is sent to the battery charger to charge the battery (424). The battery can then be charged (426), i.e., the battery charger supplies or provides a charging current or voltage to the battery. If there is no voltage at the cradle port (420), a signal can be sent to the battery charger to refrain from charging the battery (422). If no charge is detected at the cradle port, the port can be considered "open" or an "open circuit" where there is no circuit connection between the cradle port and a cradle device. Thus, no charge is directed from the cradle device to the battery charger. In certain implementations, refraining from charging the battery includes directing the charge received at the cradle port away from the battery charger (e.g., so that the battery does not waste power trying to charge itself). The charge may be directed to, for example, other electronic components in the host, or the charge may be directed on or to the USB port (and thereby to a connected peripheral device), or both, or the charge may be directed nowhere (i.e., the absence of voltage results in no charge movement, or current). In certain instances, a determination can be made as to whether there is a voltage at the cradle port (and/or whether this voltage is associated with a cradle). In other implementations, the presence of a voltage at a cradle terminal (V_Cradle) will cause a bypass circuit to signal the battery charger to charge the battery.

Several implementations have been described in detail above, and various modifications are possible. The disclosed subject matter, including the functional operations described in this specification, can be implemented in electronic circuitry, computer hardware, firmware, software, or in combinations of them, such as the structural means disclosed in this specification and structural equivalents thereof, including potentially a program operable to cause one or more data processing apparatus to perform the operations described (such as a program encoded in a computer-readable medium, which can be a memory device, a storage device, a machine-readable storage substrate, or other physical, machine-readable medium, or a combination of one or more of them). For example, NFET 304 of FIG. 3 connected to V_USB can be controlled by software. A "high" signal can restrict current from flowing from V_USB to the battery charger 306, whereas a "low" signal will allow current to flow. Alternatively, software can disable charging by controlling the negative charge enable terminal on the battery charger 306.

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

The features described above and claimed may give rise to one or more advantages. For example, aspects of the present disclosure allow for an electronic device to power a USB HOST MODE peripheral device without the battery of the electronic device sending charge to itself. Further, aspects of the present disclosure provide for multiple charging ports while maintaining a low-cost, compact design that operates relatively quickly and, in some implementations, automatically (i.e., without determinative steps or instructions). The compact design allows for smaller electronic devices and/or more room for other features or circuits.

Other implementations fall within the scope of the following claims, which solely define the scope of the protection.

## Claims

1. A method for charging an electronic device (201) having a first charging port (202) and a second charging port (210), the method comprising:
sensing (402) that an external device (208) is connected to the first charging port (202),
the first charging port electrically connected to a battery charger (218) of a battery (220) of the electronic device (201) by a first connection and configured to provide a charge to the battery charger (218) through the first connection, wherein the first charging port is a USB port,
the first charging port (202) further electrically connected to a power management circuit (312) of the electronic device (201) by a second connection;
a third connection electrically coupling the second charging port (210) to the battery charger (218) of the electronic device (201), the second charging port (210) configured to provide a charge to the battery charger (218) through the third connection when the second charging port (210) is connected to a power supply;
if a charge is detected at the first connection by a bypass circuit (302) of the electronic device (201) and no charge is detected at the second connection, providing (410) an indication to the battery charger (218) to charge the battery (220), wherein the charge at the first connection indicates that the external device (208) is a battery charging device; and
if a charge is detected at the second connection and no charge is detected at the third connection, providing (422) an indication to the battery charger (218) to bypass charging the battery (220), wherein a charge at the second connection indicates that the external device is a peripheral device.

2. The method of claim 1, further comprising:
identifying (420) a charge on the second charging port (210); and
directing the charge on the second charging port (210) to the battery charger (218).

3. The method of claim 2, wherein the charge on the second charging port (210) is received from a battery charging device (214).

4. An electronic device (201) comprising a first charging port (202), a second charging port (210), a battery charger (218), a power management circuit (312), a bypass circuit (302), a peripheral device detector (204), a first connection, a second connection, and a third connection;
wherein the first charging port is a USB port, and the first charging port (202) electrically connected to the battery charger (218) of a battery (220) of the electronic device (201) by the first connection and configured to provide a charge to the battery charger (218) through the first connection when a battery charging device (208) is connected to the first charging port (202), the first charging port further electrically connected to the power management circuit (312) of the electronic device (201) by the second connection and configured to receive a charge from the power management circuit (312) by the second connection when a peripheral device is detected, by the peripheral device detector, to be connected to the first charging port (202); and
the second charging port (210) electrically coupled to the battery charger (218) of the battery (220) of the electronic device (201) by the third connection and configured to provide a charge to the battery charger (218) through the third connection when the second charging port (210) is connected to a power supply; and
the bypass circuit (302) configured to:
provide (410, 424) an indication to the battery charger (218) to charge the battery (220) if a charge at the first connection is detected and no charge at the second connection is detected, and
provide (422) an indication to the battery charger (218) to bypass charging the battery (220) if a charge is detected at the second connection and no charge is detected at the third connection.

5. The electronic device of claim 4, wherein the bypass circuit (302) comprises a first circuit element (304) electrically connected to the second connection, and the indication is based on an output of the first circuit element.

6. The electronic device of claim 5, wherein the first circuit element (304) is an n-type metal oxide semiconductor field effect transistor, NFET.

7. The electronic device of claim 5 or 6, wherein the battery charger (306) comprises a second circuit element (308) configured to signal the battery charger (306) to charge or bypass charging of the battery (220) based on the indication provided by the bypass circuit (302).

8. The electronic device of claim 7, wherein the second circuit element (308) is a negative chip enable pinout.

9. The electronic device of any one of claims 4 to 8, wherein the bypass circuit (302) further comprises a third circuit element (D1) configured to prevent the charge on the second charging port (210) from being directed to the first charging port (202).

10. The electronic device of claim 9, wherein the third circuit element is a diode.

11. The electronic device of any one of claims 4 to 10, wherein the bypass circuit (302) further comprises a fourth circuit element (D2) configured to prevent the charge on the first charging port (202) from being directed to the second charging port (210).

12. The electronic device of claim 11, wherein the fourth circuit element is a diode.

13. The electronic device of any one of claims 4 to 12, wherein the first charging port is configured to support a USB On-the-Go mode.

## Patentansprüche

1. Ein Verfahren zum Laden einer elektronischen Vorrichtung (201), die einen ersten Ladeanschluss (202) und einen zweiten Ladeanschluss (210) aufweist, wobei das Verfahren Folgendes beinhaltet:
Erfassen (402), dass eine externe Vorrichtung (208) mit dem ersten Ladeanschluss (202) verbunden ist,
wobei der erste Ladeanschluss durch eine erste Verbindung mit einem Batterieladegerät (218) einer Batterie (220) der elektronischen Vorrichtung (201) elektrisch verbunden und dazu konfiguriert ist, dem Batterieladegerät (218) über die erste Verbindung eine Ladung bereitzustellen, wobei der erste Ladeanschluss ein USB-Anschluss ist,
wobei der erste Ladeanschluss (202) ferner durch eine zweite Verbindung mit einer Leistungsverwaltungsschaltung (312) der elektronischen Vorrichtung (201) elektrisch verbunden ist;
wobei eine dritte Verbindung den zweiten Ladeanschluss (210) mit dem Batterieladegerät (218) der elektronischen Vorrichtung (201) elektrisch koppelt, wobei der zweite Ladeanschluss (210) dazu konfiguriert ist, dem Batterieladegerät (218) über die dritte Verbindung eine Ladung bereitzustellen, sobald der zweite Ladeanschluss (210) mit einer Leistungsversorgung verbunden ist;
wenn eine Ladung an der ersten Verbindung durch eine Umgehungsschaltung (302) der elektronischen Vorrichtung (201) detektiert wird und keine Ladung an der zweiten Verbindung detektiert wird, Bereitstellen (410) einer Angabe für das Batterieladegerät (218), dass die Batterie (220) zu laden ist, wobei die Ladung an der ersten Verbindung angibt, dass die externe Vorrichtung (208) eine Batterieladevorrichtung ist; und
wenn eine Ladung an der zweiten Verbindung detektiert wird und keine Ladung an der dritten Verbindung detektiert wird, Bereitstellen (422) einer Angabe für das Batterieladegerät (218), dass das Laden der Batterie (220) zu umgehen ist, wobei eine Ladung an der zweiten Verbindung angibt, dass die externe Vorrichtung eine Peripherievorrichtung ist.

2. Verfahren gemäß Anspruch 1, das ferner Folgendes beinhaltet:
Identifizieren (420) einer Ladung an dem zweiten Ladeanschluss (210); und
Leiten der Ladung an dem zweiten Ladeanschluss (210) zu dem Batterieladegerät (218).

3. Verfahren gemäß Anspruch 2, wobei die Ladung an dem zweiten Ladeanschluss (210) von einer Batterieladevorrichtung (214) empfangen wird.

4. Eine elektronische Vorrichtung (201), die einen ersten Ladeanschluss (202), einen zweiten Ladeanschluss (210), ein Batterieladegerät (218), eine Leistungsverwaltungsschaltung (312), eine Umgehungsschaltung (302), einen Peripherievorrichtungsdetektor (204), eine erste Verbindung, eine zweite Verbindung und eine dritte Verbindung beinhaltet;
wobei der erste Ladeanschluss ein USB-Anschluss ist und der erste Ladeanschluss (202) durch die erste Verbindung mit dem Batterieladegerät (218) einer Batterie (220) der elektronischen Vorrichtung (201) elektrisch verbunden und dazu konfiguriert ist, dem Batterieladegerät (218) über die erste Verbindung eine Ladung bereitzustellen, sobald eine Batterieladevorrichtung (208) mit dem ersten Ladeanschluss (202) verbunden ist, wobei der erste Ladeanschluss ferner durch die zweite Verbindung mit der Leistungsverwaltungsschaltung (312) der elektronischen Vorrichtung (201) elektrisch verbunden und dazu konfiguriert ist, durch die zweite Verbindung eine Ladung von der Leistungsverwaltungsschaltung (312) zu empfangen, sobald eine Peripherievorrichtung durch den Peripherievorrichtungsdetektor detektiert wird, um mit dem ersten Ladeanschluss (202) verbunden zu werden; und
wobei der zweite Ladeanschluss (210) durch die dritte Verbindung mit dem Batterieladegerät (218) der Batterie (220) der elektronischen Vorrichtung (201) elektrisch gekoppelt und dazu konfiguriert ist, dem Batterieladegerät (218) über die dritte Verbindung eine Ladung bereitzustellen, sobald der zweite Ladeanschluss (210) mit einer Leistungsversorgung verbunden ist; und
wobei die Umgehungsschaltung (302) zu Folgendem konfiguriert ist:
Bereitstellen (410, 424) einer Angabe für das Batterieladegerät (218), dass die Batterie (220) zu laden ist, wenn eine Ladung an der ersten Verbindung detektiert wird und keine Ladung an der zweiten Verbindung detektiert wird, und
Bereitstellen (422) einer Angabe für das Batterieladegerät (218), dass das Laden der Batterie (220) zu umgehen ist, wenn eine Ladung an der zweiten Verbindung detektiert wird und keine Ladung an der dritten Verbindung detektiert wird.

5. Elektronische Vorrichtung gemäß Anspruch 4, wobei die Umgehungsschaltung (302) ein mit der zweiten Verbindung elektrisch verbundenes erstes Schaltungselement (304) beinhaltet und die Angabe auf einer Ausgabe des ersten Schaltungselements basiert.

6. Elektronische Vorrichtung gemäß Anspruch 5, wobei das erste Schaltungselement (304) ein N-Metall-Oxid-Halbleiter-Feldeffekttransistor, NFET, ist.

7. Elektronische Vorrichtung gemäß Anspruch 5 oder 6, wobei das Batterieladegerät (306) ein zweites Schaltungselement (308) beinhaltet, das dazu konfiguriert ist, dem Batterieladegerät (306) basierend auf der von der Umgehungsschaltung (302) bereitgestellten Angabe zu signalisieren, dass die Batterie (220) zu laden oder deren Laden zu umgehen ist.

8. Elektronische Vorrichtung gemäß Anspruch 7, wobei es sich bei dem zweiten Schaltungselement (308) um eine negative Chip-Enable-Pinbelegung handelt.

9. Elektronische Vorrichtung gemäß einem der Ansprüche 4 bis 8, wobei die Umgehungsschaltung (302) ferner ein drittes Schaltungselement (D1) beinhaltet, das dazu konfiguriert ist, zu verhindern, dass die Ladung an dem zweiten Ladeanschluss (210) zu dem ersten Ladeanschluss (202) geleitet wird.

10. Elektronische Vorrichtung gemäß Anspruch 9, wobei das dritte Schaltungselement eine Diode ist.

11. Elektronische Vorrichtung gemäß einem der Ansprüche 4 bis 10, wobei die Umgehungsschaltung (302) ferner ein viertes Schaltungselement (D2) beinhaltet, das dazu konfiguriert ist, zu verhindern, dass die Ladung an dem ersten Ladeanschluss (202) zu dem zweiten Ladeanschluss (210) geleitet wird.

12. Elektronische Vorrichtung gemäß Anspruch 11, wobei das vierte Schaltungselement eine Diode ist.

13. Elektronische Vorrichtung gemäß einem der Ansprüche 4 bis 12, wobei der erste Ladeanschluss dazu konfiguriert ist, einen USB-On-the-Go-Modus zu unterstützen.

## Revendications

1. Un procédé pour charger un dispositif électronique (201) ayant un premier port de chargement (202) et un deuxième port de chargement (210), le procédé comprenant :
le fait de déceler (402) qu'un dispositif externe (208) est connecté au premier port de chargement (202),
le premier port de chargement étant connecté électriquement à un chargeur de batterie (218) d'une batterie (220) du dispositif électronique (201) par une première connexion et configuré pour fournir une charge au chargeur de batterie (218) par le biais de la première connexion, dans lequel le premier port de chargement est un port USB,
le premier port de chargement (202) étant en outre connecté électriquement à un circuit de gestion d'alimentation (312) du dispositif électronique (201) par une deuxième connexion ;
une troisième connexion couplant électriquement le deuxième port de chargement (210) au chargeur de batterie (218) du dispositif électronique (201), le deuxième port de chargement (210) étant configuré pour fournir une charge au chargeur de batterie (218) par le biais de la troisième connexion lorsque le deuxième port de chargement (210) est connecté à une source d'alimentation ;
si une charge est détectée au niveau de la première connexion par un circuit de dérivation (302) du dispositif électronique (201) et qu'aucune charge n'est détectée au niveau de la deuxième connexion, le fait de fournir (410) une indication au chargeur de batterie (218) de charger la batterie (220), dans lequel la charge au niveau de la première connexion indique que le dispositif externe (208) est un dispositif de chargement de batterie ; et
si une charge est détectée au niveau de la deuxième connexion et qu'aucune charge n'est détectée au niveau de la troisième connexion, le fait de fournir (422) une indication au chargeur de batterie (218) de dériver le chargement de la batterie (220), dans lequel une charge au niveau de la deuxième connexion indique que le dispositif externe est un dispositif périphérique.

2. Le procédé de la revendication 1, comprenant en outre :
le fait d'identifier (420) une charge sur le deuxième port de chargement (210) ; et
le fait de diriger la charge sur le deuxième port de chargement (210) vers le chargeur de batterie (218).

3. Le procédé de la revendication 2, dans lequel la charge sur le deuxième port de chargement (210) est reçue en provenance d'un dispositif de chargement de batterie (214).

4. Un dispositif électronique (201) comprenant un premier port de chargement (202), un deuxième port de chargement (210), un chargeur de batterie (218), un circuit de gestion d'alimentation (312), un circuit de dérivation (302), un détecteur de dispositif périphérique (204), une première connexion, une deuxième connexion, et une troisième connexion ;
dans lequel le premier port de chargement est un port USB, et le premier port de chargement (202) est connecté électriquement au chargeur de batterie (218) d'une batterie (220) du dispositif électronique (201) par la première connexion et configuré pour fournir une charge au chargeur de batterie (218) par le biais de la première connexion lorsqu'un dispositif de chargement de batterie (208) est connecté au premier port de chargement (202), le premier port de chargement est en outre connecté électriquement au circuit de gestion d'alimentation (312) du dispositif électronique (201) par la deuxième connexion et configuré pour recevoir une charge en provenance du circuit de gestion d'alimentation (312) par la deuxième connexion lorsqu'un dispositif périphérique est détecté, par le détecteur de dispositif périphérique, comme étant connecté au premier port de chargement (202) ; et
le deuxième port de chargement (210) est couplé électriquement au chargeur de batterie (218) de la batterie (220) du dispositif électronique (201) par la troisième connexion et configuré pour fournir une charge au chargeur de batterie (218) par le biais de la troisième connexion lorsque le deuxième port de chargement (210) est connecté à une source d'alimentation ; et
le circuit de dérivation (302) est configuré pour :
fournir (410, 424) une indication au chargeur de batterie (218) de charger la batterie (220) si une charge au niveau de la première connexion est détectée et qu'aucune charge au niveau de la deuxième connexion n'est détectée, et
fournir (422) une indication au chargeur de batterie (218) de dériver le chargement de la batterie (220) si une charge est détectée au niveau de la deuxième connexion et qu'aucune charge n'est détectée au niveau de la troisième connexion.

5. Le dispositif électronique de la revendication 4, dans lequel le circuit de dérivation (302) comprend un premier élément de circuit (304) connecté électriquement à la deuxième connexion, et l'indication est basée sur une sortie du premier élément de circuit.

6. Le dispositif électronique de la revendication 5, dans lequel le premier élément de circuit (304) est un transistor à effet de champ à semiconducteur à oxyde métallique de type n *(n-type metal oxide semiconductor field effect transistor,* NFET).

7. Le dispositif électronique de la revendication 5 ou de la revendication 6, dans lequel le chargeur de batterie (306) comprend un deuxième élément de circuit (308) configuré pour signaler au chargeur de batterie (306) de charger ou de dériver le chargement de la batterie (220) sur la base de l'indication fournie par le circuit de dérivation (302).

8. Le dispositif électronique de la revendication 7, dans lequel le deuxième élément de circuit (308) est un brochage d'activation de puce négative.

9. Le dispositif électronique de l'une quelconque des revendications 4 à 8, dans lequel le circuit de dérivation (302) comprend en outre un troisième élément de circuit (D1) configuré pour empêcher la charge sur le deuxième port de chargement (210) d'être dirigée vers le premier port de chargement (202).

10. Le dispositif électronique de la revendication 9, dans lequel le troisième élément de circuit est une diode.

11. Le dispositif électronique de l'une quelconque des revendications 4 à 10, dans lequel le circuit de dérivation (302) comprend en outre un quatrième élément de circuit (D2) configuré pour empêcher la charge sur le premier port de chargement (202) d'être dirigée vers le deuxième port de chargement (210).

12. Le dispositif électronique de la revendication 11, dans lequel le quatrième élément de circuit est une diode.

13. Le dispositif électronique de l'une quelconque des revendications 4 à 12, dans lequel le premier port de chargement est configuré pour supporter un mode USB On-the-Go.
